# EUROPEAN PATENT APPLICATION

(11) **EP 1 605 574 A1**
(43) Date of publication of application: **14.12.2005**
(21) Application number: 04405326.2
(22) Date of filing: 27.05.2004
(51) Int. Cl.: H02K 1/27, H02K 15/03

(54) **Rotor for synchronous motor**

(71) Applicant: INVENTIO AG, CH-6052 Hergiswil (CH)
(72) Inventor: Garcia, Fernando, Ing., Ubatuba Sao Paulo 11680-970 (BR); Ogava, Mario Yoshitaro, Ing., BR-Sao Paulo (BR)

(57) **Abstract**

Rotor for synchronous motor comprising a cylindrical rotor core (5) surrounded by at least 2 rotor poles (1), wherein each rotor pole consists in a cylindrical sector metal plate (2) onto which magnets (3) are glued.

Method to assembly a rotor for synchronous motor comprising the steps of:
gluing magnets (3) on cylindrical sector metal plates (2), which constitute rotor poles (1);
magnetizing the rotor poles;
positioning the magnetized rotor poles around a rotor core (5);
fixing the magnetized rotor poles to the rotor core.

## Description

The present invention concerns a rotor for synchronous motor, such as those used for elevator drives, and a method for the assembly of a rotor for synchronous motor.

### Background art

The current assembly processes of rare earth magnets on the rotor surface of the synchronous motors are complex, expensive and require long times.

The magnetization of the rotor after the assembly process leads in general to poor results.
Due to the hardening and breakability characteristics of the magnetic materials and to the high forces necessary to put and hold the magnets in their right positions, the process is complex and expensive.

A satisfactory method to fix the magnets on the rotor is the use of a bi-component glue. This assembly process is, however, time consuming as well, because of the need of holding the magnets during the curing time.

The patent document DE 19604116 C1 proposes to split the assembly process in two steps.

The magnets are first of all assembled and glued in a demagnetized state on suitable steel sheet packages made of a pile of several steel sheet segments packed together one over another.

Successively the magnets are magnetized and disposed around the rotor core in suitable positions by slipping the steel sheet packages into appropriate stud rods.

Such a rotor and its fabrication method exhibit, however, disadvantages.

Concerning the rotor core composition, a large number of steel sheet segments must be produced, according to the solution in DE 19604116 C1. The high number of required metal pieces makes the rotor expensive and difficult to build. The assembly of a large number of these segments together into packages must be carried out with high precision and is in general difficult. Axial rods are needed to keep the segments in place. The segments themselves must be punched with high accuracy, so that they can be slipped into the rods.

Concerning the magnets, a large number of magnets is again required according to the solution in DE 19604116 C1. The high number of required magnetic pieces makes the rotor expensive and difficult to build. In DE 19604116 C1 the magnets are firmly fixed to the steel sheet segments, but they are not really firmly fixed to the rotor core, since air gaps and fabrication tolerances are always present between the holes in the sheet packages and the stud rods retaining the steel packages. These fabrication defects and inaccuracies reduce in general the efficiency of the electrical motor. The rotor is not stiff and stable and does not exhibit a satisfactory cylindrical shape.

In DE 19604116 C1 each segment contains two magnetic poles (N and S). If the magnets are fixed already magnetized, the operation to glue the magnet pieces on the segment becomes very difficult because of the repulsive forces between the magnets with different polarity. On the other side, if the magnets are fixed in a non-magnetized state, the operation to magnetize the whole rotor after the assembling of the magnets is also very difficult in this proposal, because of the need to produce opposite polarities in magnets placed at a short distance one from another. The polarizing magnetic flux must therefore necessarily exhibit a complex and accurate shape with several tight bends of the flux lines.

In the field of synchronous electrical motors the magnets are often disposed along skew lines around the rotor core, so that the electromagnetic interaction between rotor and stator is optimized and the efficiency of the motor is increased. According to the solution in DE 19604116 C1, it is not possible to dispose the magnets along skew lines enveloping the rotor core, since the slipping of the steel sheet packages into the stud rods is made impossible, if the stud rods are arranged skew around the rotor core.

Concerning the assembling, according to the solution in DE 19604116 C1 stud rods are needed to retain the steel sheet packages, said steel sheet packages must be punched and must be held in position by the stud rods during the gluing and magnetization operations of the magnets. This makes this assembly process complex, not reliable and expensive, since several different operations must be carried out with high accuracy.

It is desirable therefore to develop a synchronous motor rotor and an assembling method thereof, which does not exhibit the above mentioned disadvantages.

Accordingly, it is an object of the present invention to provide a rotor for synchronous motor which is simple, easy, fast and inexpensive to fabricate, which exhibits a good cylindrical shape and a stable, firm and rigid geometry and which exhibits an improved efficiency as well.

It is furthermore an object of the present invention to provide a method to assembly a rotor for synchronous motor, which is simple, easy, fast and inexpensive and which is characterized by a low number of operations to be carried out and by a low number of pieces to be assembled.

A rotor for synchronous motor, which solves this problem according to the present invention, is claimed in independent claim 1. This claim concerns a rotor for synchronous motor comprising a cylindrical rotor core surrounded by at least 2 rotor poles, wherein each rotor pole consists in a cylindrical sector metal plate onto which magnets are glued.

The invention as set out in claim 1 exhibits the advantages, that the cylindrical sector metal plate forms a unique large solid support for the magnets, which can be easily, rapidly und inexpensively obtained for example by machined cast iron. Since the magnets are fixed directly on the cylindrical sector metal plate and said plate is firmly fixed to the rotor core, the rotor is stiff and stable and exhibits an accurate cylindrical shape as well. The number of mechanical components and assembling operations is reduced and no stud rods or punched holes are required in addition to the supporting cylindrical sector metal plate.

Further advantageous embodiments are claimed in the other depended claims.

According to claim 2, the cylindrical sector metal plate is made of steel.

This preferred embodiment exhibits the advantage, that the cylindrical sector metal plate exhibits the highest resistance, stiffness, stability and accuracy of the cylindrical shape because of the physical properties of the metal, of which it is made.

According to claim 3, each rotor pole contains only one magnetic pole, either north or south.

This preferred embodiment exhibits the advantage, that the magnetization process after the gluing of non-magnetized magnets can be executed in a very comfortable way. As each sector contains only one pole, the whole piece can be magnetized easily as a single piece.

According to claim 4, the cylindrical sector metal plates are disposed askew around the rotor core with a predetermined magnet skew angle.

This preferred embodiment exhibits the advantage, that the efficiency of the electrical motor and the maximal torque are increased because of the optimized electromagnetic interaction between rotor and stator.

According to claim 5, the magnets are disposed along lines arranged askew with a predetermined magnet skew angle on the cylindrical sector metal plates surrounding the rotor core.

This preferred embodiment exhibits the advantage, that the efficiency of the electrical motor and the maximal torque are increased because of the optimized electromagnetic interaction between rotor and stator and, at the same time, it is not necessary to deform or adapt the geometry of the cylindrical sector metal plates, in order to obtain a predetermined magnet skew angle.

According to claim 6, the rotor poles are fixed around the rotor core by at least one fixation ring placed at the end of the cylindrical sector metal plate.

This preferred embodiment exhibits the advantage, that all the rotor poles surrounding the rotor core can be firmly fixed to the rotor core by only one or two fixation elements, i.e. the rings, which can be inserted at the extremities of the cylindrical sector metal plate with no effort, no application of mechanical pressure or force and no need of long curing times.

According to claim 7, a method to assembly a rotor for synchronous motor comprises the steps of:
gluing magnets on cylindrical sector metal plates, which constitute rotor poles;
magnetizing the rotor poles;
positioning the magnetized rotor poles around a rotor core;
fixing the magnetized rotor poles to the rotor core.

The invention as set out in claim 7 exhibits several advantages. The cylindrical sector metal plate forms a unique large solid support for the magnets, which can be easily, rapidly und inexpensively obtained for example by machined cast iron. The number of assembling operations is reduced and no stud rods or punched holes are required, in addition to the supporting cylindrical sector metal plate.

As the gluing is made with non-magnetized magnets, this operation is not critical, and as each sector contains in general only one pole, the whole piece can be magnetized easily as a single piece.
The magnets are fixed on the cylindrical sector steel plate before the magnetization, which makes this operation very easy. Also, the storage and handling of the non-magnetized magnets or the polar pieces, before the magnetization, become very simple.

The cylindrical sector steel plate with the magnets (polar piece) can be easily magnetized. This type of configuration allows the skewing of the magnets, just changing the shape of the cylindrical sector steel plate.

The only operation that requires a special attention in this process, is the operation to fix the magnetized pole piece on the rotor core.

This assembly process is also low cost, since there is no need of rods for assembling the sectors, no need to punch the sectors and no need to hold the sectors, before gluing and magnetizing the magnets.

According to claim 8, the magnetized rotor poles are positioned around the rotor core by position actuators driving guided devices, which are suited to grip and retain the rotor poles.

This preferred embodiment exhibits the advantage, that the delicate and critical operation to position the rotor poles around the rotor core is carried out by mechanical actuators, which are capable to apply very high mechanical forces contrasting the magnetic forces between different polar pieces and, at the same time, are suited to maintain a high degree of accuracy in the positioning operations.

According to claim 9, the magnetized rotor poles are fixed to the rotor core by at least one fixation ring placed at the end of the cylindrical sector metal plates.

This preferred embodiment exhibits the advantage, that all the rotor poles surrounding the rotor core can be firmly fixed to the rotor core at once by only one or two fixation elements, i.e. the rings, which are inserted at the extremities of the cylindrical sector metal plate with no effort, no application of mechanical pressure or force and no need of long curing times.

### Brief description of the drawings

For a more complete description of the present invention and for further objects and advantages thereof, reference is made to the following description, taken in conjunction with the accompanying drawings, in which:
- FIG. 1: is a schematic representation of a rotor pole exhibiting the cylindrical sector metal plate and the magnets, according to the preferred embodiment of the present invention,
- FIG. 2: is a schematic representation of the assembly process of the rotor, according to the preferred embodiment of the present invention.

### Detailed description

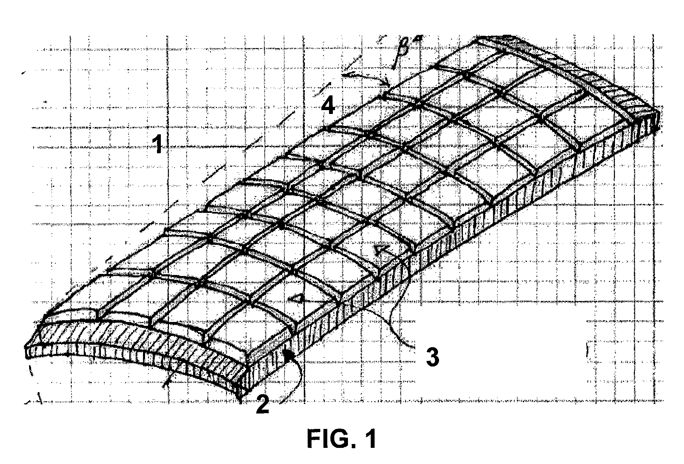

Fig. 1 shows a rotor for synchronous motor according to the preferred embodiment of the present invention.

A rotor pole 1, suited to be arranged around a cylindrical rotor core 5, consists in a cylindrical sector metal plate 2, made preferably of steel, onto which a plurality of magnets 3 have been glued with a bi-component glue.

The cylindrical sector steel plate 2 can be manufactured from a steel sheet, by punching (cut and curved) or by micro-fusion cast steel.
The inner diameter of this piece shall be equal to the outer diameter of the rotor core 5, since it will be fixed on the rotor core 5 itself.

The magnets 3 are glued with the bi component glue on the external surface of the cylindrical sector steel plate 2 in a non-magnetized state.
This operation is very easy and can be done even by hands, due to the non-magnetized condition of the magnets 3 and need no special device to be carried out.
Gluing the magnets 3 on a steel sheet also confers a mechanical stiffness to the magnets 3, which is very important above all in the case of rare earth magnets, since this sort of material can be very fragile depending on its size, due to its hardening and breakability characteristics.

The magnets 3 can be arranged along lines parallel to the axis of the cylindrical sector metal plate 2. Since, however, the performance of an electric motor is optimized if a magnet skew angle 4 is present between the axis of the rotor and the lines along which the magnets are arranged, a magnet skew angle 4 is preferably introduced by slighting bending and changing the geometry of the cylindrical sector metal plates 2 (see Fig. 1), so that the cylindrical sector metal plates 2 can be arranged askew around the rotor core 5, giving rise thereby to a magnet skew angle 4.

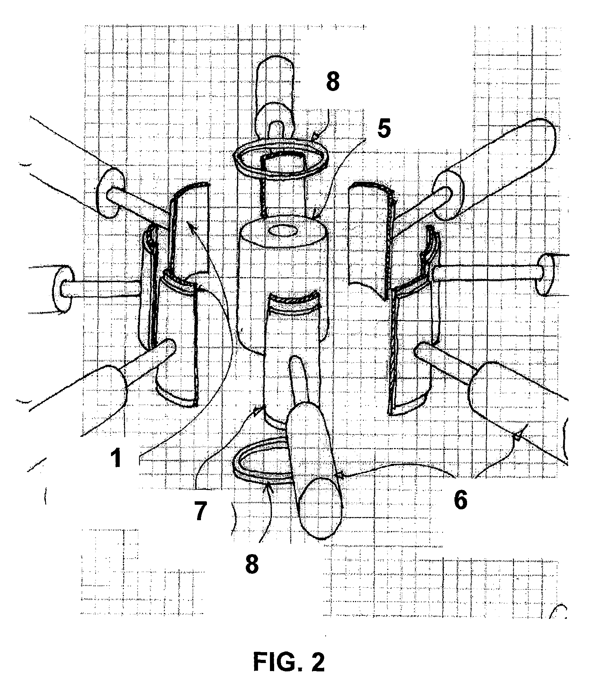

Alternatively, the cylindrical sector metal plates 2 can be arranged perfectly parallel to the axis of the rotor core 5 (see Fig. 2), while the magnets 3 are arranged on the cylindrical sector metal plate 2 along lines which are askew in respect to the axis of the cylindrical sector metal plates 2, so that a magnet skew angle 4 is in any case generated between rotor and stator (not shown in the figures).

Successively, the whole polar piece (rotor pole 1) can be easily magnetized as a single magnet, and requires no special equipment or high power magnetizer device to carry out this operation.

Each rotor pole 1 contains only one magnetic pole, either north or south, so that the magnetization process after the gluing of the non-magnetized magnets 3 can be executed in a very comfortable way. As each sector 1 contains only one pole, the whole piece 1 can be magnetized easily as a single piece.

In order to assemble the polar pieces 1 on the rotor core 5, each polar piece 1 can be hold by the arm or guided device 7 of a position actuator 6, which adjusts the correct position of each polar piece 1, as shown in Fig. 2. There is a necessity of a special device to hold the polar pieces 1 due to the strong magnetic forces involved in this operation.

The polar pieces 1 are positioned around to rotor core 5 (see Fig. 2) and then brought into contact with the rotor core 5 through this position actuators 6. The polar pieces 1 are attracted and temporarily locked into their position by the attractive magnetic forces between the polar pieces 1 and the rotor core 5.

A glue can be applied between the rotor core 5 and the polar piece 1 to ensure a good locking.

Another alternative to assemble the polar pieces 1 is to make holes at the ends of the rotor core 5 and at the ends of the polar piece 1. The polar piece 1 can be positioned by matching the two holes through an auxiliary or definitive pin.
There will be in this case no need of a position actuator, but it can take a longer time to assemble the polar pieces 1 on the rotor core 5.

In order to hold in position the polar pieces 1 after the positioning of the polar pieces 1 on the rotor core 5, two retaining rings 8 are provided on both extremities of the rotor.

These rings hold mechanically the pole pieces 1 in position, and they can be assembled in different ways.

The rings can be heated before mounting on the rotor, in order to ensure a good interference after the rings cool down.

The rings can be held in place by two opposite pins fixed into the polar pieces 1 and/or the rotor core 5.

In order to adapt the ends of the cylindrical sector steel plate 2 to receive and to lock the rings 8, a projection can be provided at the extremity of the rotor pole 1.

## Claims

1. Rotor for synchronous motor comprising a cylindrical rotor core (5) surrounded by at least 2 rotor poles (1),
**characterized in that**
each rotor pole consists in a cylindrical sector metal plate (2) onto which magnets (3) are glued.

2. Rotor according to claim 1,
wherein the cylindrical sector metal plate is made of steel.

3. Rotor according to any of the preceding claims,
wherein each rotor pole contains only one magnetic pole, either north or south.

4. Rotor according to any of the preceding claims,
wherein the cylindrical sector metal plates are disposed askew around the rotor core with a magnet skew angle (4).

5. Rotor according to any of the preceding claims,
wherein the magnets are disposed along lines askew on the cylindrical sector metal plates surrounding the rotor core, generating thereby a magnet skew angle (4).

6. Rotor according to any of the preceding claims,
wherein the rotor poles are fixed around the rotor core by at least one fixation ring (8) placed at the end of the cylindrical sector metal plate.

7. Method to assembly a rotor for synchronous motor comprising the steps of:
gluing magnets (3) on cylindrical sector metal plates (2), which constitute rotor poles (1);
magnetizing the rotor poles;
positioning the magnetized rotor poles around a rotor core (5);
fixing the magnetized rotor poles to the rotor core.

8. Method according to claim 7,
wherein the magnetized rotor poles are positioned around the rotor core by position actuators (6) driving guided devices (7), which are suited to grip and retain the rotor poles.

9. Method according to claim 7 or 8,
wherein the magnetized rotor poles are fixed to the rotor core by at least one fixation ring (8) placed at the end of the cylindrical sector metal plates.
